# FASCICULE DE BREVET EUROPEEN

(11) **EP 2 570 842 B1**
(45) Date de publication et mention de la délivrance du brevet: **12.11.2014**
(21) Numéro de dépôt: 12183932.8
(22) Date de dépôt: 11.09.2012
(51) Int. Cl.: G02B 26/08, G02B 7/185, G02B 26/06

(54) **Miroir comprenant des moyens mécaniques de génération d'aberrations géométriques primaires**
Spiegel mit mechanischen Mitteln zum generieren von primairen geometrischen Aberrationen.
Mirror having mechanical means of generating primary geometric aberrations

(30) Priorité: 16.09.2011 FR 1102805
(43) Date de publication de la demande: 20.03.2013
(73) Titulaire: Thales, 92200 Neuilly Sur Seine (FR); Centre National de la Recherche Scientifique, 75016 Paris (FR); Centre National d'Etudes Spatiales (C.N.E.S.), 75001 Paris (FR); Université d'Aix Marseille, 13284 Marseille Cedex 07 (FR)
(72) Inventeur: Hugot, Emmanuel, 13388 MARSEILLE Cedex (FR); Laslandes, Marie, 13388 MARSEILLE Cedex (FR); Ferrari, Marc, 13388 MARSEILLE Cedex (FR); Liotard, Arnaud, 06130 GRASSE (FR)
(74) Mandataire: Bréda, Jean-Marc

(56) Documents cités:
- WO-A2-01/81976
- US-A- 4 043 644
- US-B1- 6 425 671
- US-B1- 7 229 178
- US-B2- 6 467 915

## Description

Le domaine de l'invention est celui des miroirs déformables et plus précisément des miroirs dont la surface réfléchissante est une portion de paraboloïde.

En optique, la réalisation de surfaces asphériques nécessite la mise en oeuvre de moyens de réalisation bien plus complexes que la réalisation de surfaces sphériques simples. Cette réalisation est d'autant plus délicate si la surface n'est pas de révolution. Or, dans un grand nombre d'applications et en particulier dans le domaine de l'instrumentation pour l'astronomie, les combinaisons optiques à miroirs nécessitent de telles surfaces. Celles-ci sont généralement des surfaces paraboliques hors d'axe. Une fois la surface réalisée, il n'est plus possible de modifier sa forme.

On sait aujourd'hui réaliser des surfaces déformables de façon programmée. Ces systèmes sont utilisés notamment pour réaliser des surfaces adaptatives. Pour réaliser un tel système, on dispose sous la surface du miroir à déformer un jeu d'actionneurs qui agissent sur la surface en fonction d'une analyse d'un front d'onde étalon jusqu'à obtenir la surface souhaitée. On comprend que cette technique nécessite des moyens d'analyse complexes et un grand nombre d'actionneurs. Aussi, le brevet US 6 425 671 intitulé « Optical mirror flexing structure and assembly » décrit une structure comportant un seul actionneur central permettant de déformer un miroir circulaire, au détriment cependant des possibilités de déformation du miroir.

Le système selon l'invention ne présente pas ces inconvénients. Il fonctionne selon un autre principe. On sait que, lorsqu'une surface optique réfléchissante ne correspond pas à la surface idéale, un faisceau de lumière réfléchi par cette surface va présenter des aberrations géométriques. Or, il est possible de décomposer ces aberrations géométriques en grands types d'aberrations, chaque type correspondant à une déformation géométrique simple de la surface réfléchissante. Ces déformations peuvent être engendrées au moyen d'un nombre réduit d'actionneurs judicieusement placés sous la surface réfléchissante.

Ainsi, si la surface idéale est une portion de paraboloïde et si la surface réelle est une portion de sphère, on démontre que la surface paraboloïde peut être obtenue à partir de trois types d'aberrations qui sont un terme de « focus », un terme de « coma » et un terme d' « astigmatisme ». Il est alors possible de déformer la surface sphérique au moyen de trois déformations simples correspondant à ces trois aberrations, nécessitant ainsi un nombre réduit d'actionneurs, un par mode.

Plus précisément, l'invention a pour objet un dispositif optique comprenant au moins un miroir déformable et un système de déformation dudit miroir, ledit miroir de forme sensiblement circulaire ayant une face réfléchissante et une face opposée comportant un pourtour solidaire du système de déformation, caractérisé en ce que le système de déformation comporte au moins :
Une première structure mécanique comprenant au moins un premier pourtour ;
Un premier actionneur électromécanique solidaire de la première structure mécanique ;
Une seconde structure mécanique comprenant un fond sensiblement plan et un second pourtour déformables, le fond étant solidaire du premier pourtour, le second pourtour étant solidaire du pourtour du miroir ;
Un plot rigide solidaire du fond, sensiblement plan et centré sur le fond, le premier actionneur électromécanique exerçant une force prédéterminée sur le plot perpendiculairement à la surface dudit plot, de façon à générer une répartition uniforme des moments de flexion sur le pourtour du miroir;
Un second actionneur électromécanique, ledit second actionneur étant disposé de façon à exercer un moment de flexion prédéterminé sur le plot parallèlement à la surface dudit plot, de façon à générer une répartition des moments de flexion sur le pourtour du miroir modulée par une fonction en sinus ou cosinus.

Avantageusement, le second actionneur exerce une force prédéterminée sur le plot parallèlement à la surface dudit plot.

Avantageusement, le premier actionneur et le second actionneur sont disposés de façon à exercer deux forces prédéterminées sur le plot perpendiculairement à la surface dudit plot, de même intensité et de sens opposé, les points d'application des deux forces étant séparés d'une distance prédéterminée.

Avantageusement, quatre actionneurs sont disposés de façon à exercer quatre forces prédéterminées sur le plot perpendiculairement à la surface dudit plot, d'intensité prédéterminée, les points d'application des forces étant séparés d'une distance prédéterminée.

Avantageusement, le système de déformation comporte une troisième structure comportant des moyens électromécaniques agencés de façon à exercer aux extrémités d'un premier diamètre du pourtour du miroir deux premières forces prédéterminées perpendiculairement à la face réfléchissante, de même intensité et de même sens.

Avantageusement, les moyens électromécaniques sont agencés de façon à exercer aux extrémités d'un second diamètre du pourtour du miroir orthogonal au premier diamètre, deux secondes forces prédéterminées perpendiculairement à la face réfléchissante, de même intensité et de sens opposé aux premières forces prédéterminées.

Avantageusement, la troisième structure comporte deux barres déformables disposées orthogonalement l'une de l'autre et sensiblement parallèlement à la face réfléchissante, la première barre étant solidaire du pourtour du miroir aux deux extrémités du premier diamètre et la seconde barre étant solidaire du pourtour du miroir aux deux extrémités du second diamètre, les moyens électromécaniques étant agencés de façon à exercer à l'intersection des deux barres deux forces opposées qui tend à modifier la distance qui les sépare dans une dimension perpendiculaire à la face réfléchissante.

Avantageusement, la face réfléchissante du miroir déformable est plane ou sphérique ou asphérique en dehors de toute déformation.

L'invention concerne également un procédé de réalisation d'un miroir déformable, caractérisé en ce que l'étape de réalisation du polissage dudit miroir est faite sur un outillage comportant un dispositif optique comprenant le miroir et un système de déformation dudit miroir comme défini ci-dessus.

L'invention sera mieux comprise et d'autres avantages apparaîtront à la lecture de la description qui va suivre donnée à titre non limitatif et grâce aux figures annexées parmi lesquelles :
La figure 1 représente une vue en coupe d'un dispositif optique comprenant un miroir déformable et un système de déformation selon l'invention, les actionneurs n'étant pas représentés ;
La figure 2 représente la même vue en coupe, le système de déformation comprenant un actionneur exerçant une force axiale de déformation, générant ainsi le mode « focus » ;
La figure 3 représente la même vue en coupe, le système de déformation comprenant un actionneur exerçant un moment de flexion latéral de déformation, générant ainsi le mode « coma » ;
La figure 4 représente la même vue en coupe, le système de déformation comprenant un actionneur exerçant une force latérale de déformation, générant ainsi le mode « coma » ;
La figure 5 représente la même vue en coupe, le système de déformation comprenant deux actionneurs exerçant deux forces axiales et opposées de déformation, générant ainsi le mode « coma » ;
La figure 6 représente la même vue en coupe, le système de déformation comprenant deux actionneurs exerçant deux forces axiales différentielles de déformation, générant ainsi une combinaison des modes « focus » et « coma » ;
La figure 7 représente une vue en perspective d'un système de déformation comprenant quatre actionneurs exerçant quatre forces axiales différentielles de déformation, générant ainsi les combinaisons de modes focus, les comas et l'astigmatisme ;
La figure 8 représente une vue en perspective d'un dispositif optique comprenant un miroir déformable et un système de déformation selon l'invention comprenant quatre actionneurs répartis sur le pourtour du miroir, générant ainsi le mode « astigmatisme » ;
La figure 9 enfin représente une vue en perspective d'une partie d'un système de déformation selon l'invention comprenant deux barres de transmission de force orthogonales, générant ainsi le mode « astigmatisme ».

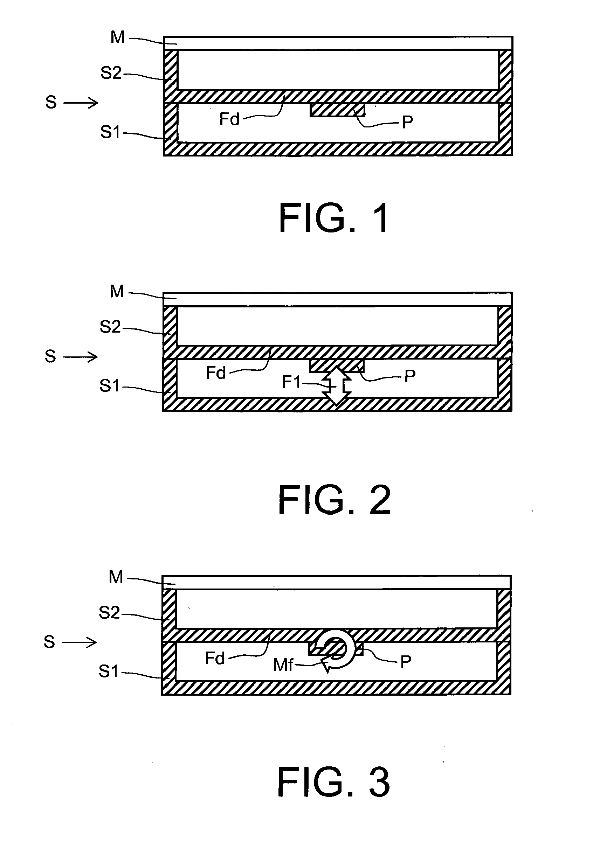

A titre de premier exemple non limitatif, la figure 1 représente une vue en coupe d'un dispositif optique comprenant un miroir M déformable et un système de déformation S selon l'invention, les actionneurs n'étant pas représentés.

Le miroir M peut être une plaque de forme sensiblement circulaire ou elliptique. Son épaisseur peut être constante comme indiqué sur les différentes figures. La répartition d'épaisseur peut également suivre une loi particulière de façon à répondre à des contraintes de tenue mécanique ou de fabrication.

Le miroir M comporte une face avant réfléchissante adaptée au rayonnement à réfléchir et une face arrière solidaire du système de déformation. Cette face arrière comporte un pourtour de fixation au système de déformation. La forme de ce pourtour ne correspond pas nécessairement à la forme générale du miroir.

Le système de déformation S, dans sa version de base, comporte essentiellement deux structures mécaniques S1 et S2. Sur la figure 1 et les suivantes, pour des raisons de simplification, les pièces mécaniques sont des pièces circulaires comprenant des fonds plats d'épaisseur constante et des pourtours cylindriques de révolution de hauteur et d'épaisseur constante. Bien entendu, en fonction de l'application, des formes différentes sont envisageables dans le cadre de cette invention, typiquement des pourtours non-cylindriques et des variations d'épaisseurs radiale et/ou angulaires.

Une première structure mécanique S1 sert de support. Elle comprend une base plane et un premier pourtour solidaire de cette base. Une seconde structure mécanique S2 sert de pièce intermédiaire entre le support S1 et le miroir M. Elle comprend un fond sensiblement plan Fd et un second pourtour déformables, le fond étant solidaire du premier pourtour, le second pourtour étant solidaire du pourtour du miroir M.

Un plot rigide P est solidaire du fond Fd. Il est sensiblement plan et centré sur le fond.

Les différentes pièces mécaniques S1, S2, P et M sont liées entre elles par les techniques usuelles employées en fabrication optique. On peut les coller, les assembler par adhérence moléculaires ou les solidariser par tout autre moyen d'adhésion. Il est également possible d'usiner un ensemble mécanique commun comprenant plusieurs pièces mécaniques du système de déformation. En fonction de l'effet recherché, le collage peut être continu sur toute la surface de contact reliant deux pièces mécaniques ou discontinu, par plots ou par bandes de collage.

Le système de déformation comporte en outre un ou plusieurs actionneurs électromécaniques. Comme il a été dit, les aberrations géométriques dites du troisième ordre correspondent chacune à une déformation géométrique simple de la surface réfléchissante. Plus précisément, dans un repère en coordonnées cylindriques (r, θ, z), z étant orienté selon l'axe optique du miroir, on peut établir le tableau I ci-dessous des déformations selon l'axe z suivant, en fonction de l'aberration.

**TABLEAU I**

| TYPE D'ABERRATION | CORRECTION GEOMETRIQUE |
|---|---|
| Focus | z= r² |
| Astigmatisme | z= r²cos(2θ) ou z= r²sin(2θ) |
| Coma | z= r³cos(θ) ou z= r³sin(θ) |

Or, en imposant des forces ou des moments de flexion avec une certaine répartition au pourtour du miroir, si sa structure est suffisamment souple pour être déformée, on obtient les corrections géométriques recherchées.

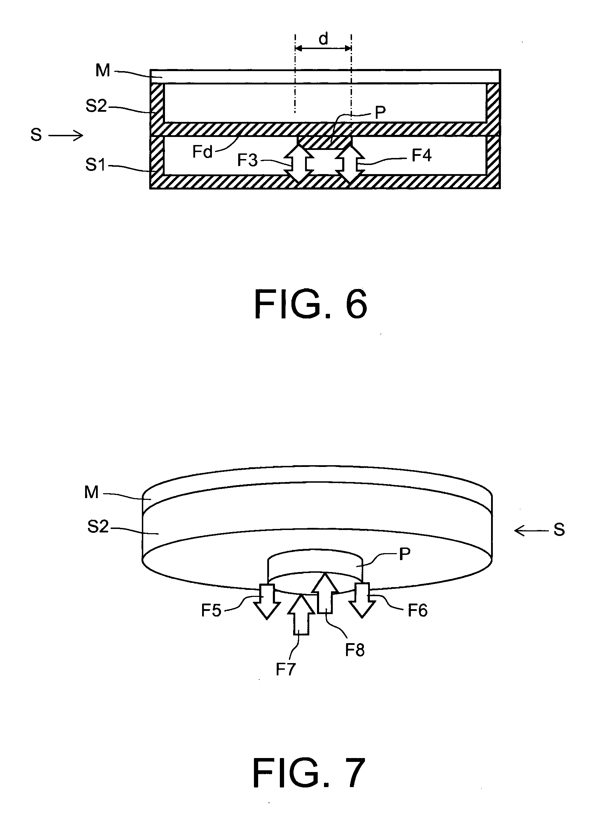

Ainsi si l'on veut corriger ou créer une aberration de focus, le système de déformation comporte un premier actionneur électromécanique exerçant une force prédéterminée sur le plot perpendiculairement à la surface dudit plot, de façon à générer une répartition uniforme des moments de flexion sur le pourtour du miroir. Sur la figure 2, on a représenté par une flèche blanche double la position et la direction de la force F1 appliquée au plot P. Ces moments de flexion vont entraîner la déformation souhaitée en r² de la surface du miroir. Une alternative à deux actionneurs disposés de part et d'autre du plot et appliquant une même force est représentée en figure 6. Le résultat recherché est identique.

Dans un premier mode de réalisation, si l'on veut corriger ou créer une aberration de coma, le système de déformation comporte un second actionneur électromécanique, disposé de façon à exercer un moment de flexion prédéterminé sur le plot parallèlement à la surface dudit plot, de façon à générer une répartition des moments de flexion sur le pourtour du miroir modulée par la fonction trigonométrique souhaitée.

Pour créer ce moment de flexion, trois configurations d'actionneurs sont possibles comme représentées sur les figures 3, 4, 5 et 6.

Sur la figure 3, l'actionneur électromécanique exerce un moment de flexion Mf prédéterminé sur le plot P parallèlement à la surface dudit plot. Ce moment est représenté par une flèche blanche semi-circulaire.

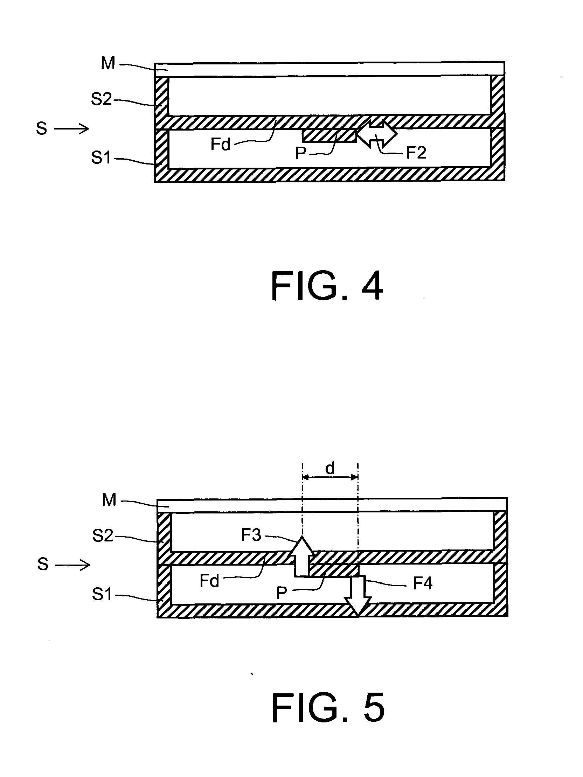

Sur la figure 4, l'actionneur électromécanique exerce une force prédéterminée sur le plot P parallèlement à la surface dudit plot. Cette force est représentée par une flèche blanche double F2.

Sur la figure 5, le système de déformation comporte un premier actionneur et un second actionneur disposés de façon à exercer deux forces prédéterminées F3 et F4 sur le plot perpendiculairement à la surface dudit plot, de même intensité et de sens opposé, les points d'application des deux forces étant séparés d'une distance prédéterminée d comme on le voit sur cette figure.

Cette dernière solution est élégante dans la mesure où ces mêmes actionneurs peuvent également être utilisés pour corriger l'aberration de focus. Il suffit alors que les forces exercées soient dans le même sens. Ainsi, il est possible de corriger au moyen de deux actionneurs seulement les aberrations de focus et les aberrations de coma simultanément comme illustré sur la figure 6. Dans le cas de la figure 6, les forces appliquées sont de même intensité si l'on cherche à corriger uniquement l'aberration de focus et d'intensité différente si l'on cherche à corriger simultanément l'aberration de focus et de coma.

Dans le cas de ce mode de réalisation, si l'on veut corriger ou créer une aberration d'astigmatisme combinée aux aberrations de focus et de coma, le système de déformation comporte quatre actionneurs électromécaniques, disposés selon un carré de façon à générer une répartition d'efforts de flexion sur le pourtour du miroir modulée par la fonction trigonométrique souhaitée.

Pour créer cet effort de flexion, les actionneurs sont disposés selon la configuration représentée sur la figure 7. Sur cette figure 7, le système de déformation comporte quatre actionneurs disposés de façon à générer quatre forces F5, F6, F7 et F8 sur le plot perpendiculairement à la surface dudit plot et de même intensité. Pour la génération d'astigmatisme, le sens des forces appliquées est identique pour les actionneurs situés sur un même diamètre. C'est le cas des forces F5 et F6, par exemple. Il est opposé pour les forces situées sur des diamètres différents. Les points d'application des forces sont séparés d'une distance prédéterminée D. Cette solution est élégante dans la mesure où ces mêmes actionneurs peuvent également être utilisés pour corriger ou générer l'aberration de focus. Il suffit que toutes les forces exercées soit dans le même sens. Les aberrations de coma peuvent également être corrigées ou générées en appliquant deux forces opposées sur les actionneurs opposés et deux forces nulles selon la direction perpendiculaire. On se retrouve alors dans la situation décrite dans la figure 5. Ainsi il est possible de corriger au moyen de quatre actionneurs seulement les aberrations de focus, les deux aberrations de comas et l'aberration d'astigmatisme.

Enfin, dans un second mode de réalisation, on peut également corriger l'astigmatisme du miroir, la coma et le focus à l'aide d'uniquement trois actionneurs. La correction d'astigmatisme au moyen d'actionneurs est connue. On se reportera aux publications d'Emmanuel Hugot, de Gérard R. Lemaître et de Marc Ferrari sur ce sujet. On citera notamment une première publication intitulée « Active optics :single actuator principle and angular thickness distribution for astigmatism compensation by elasticity » parue dans Applied Optics 47, 1401-1409 (2008) et une seconde publication intitulée « Stress polishing of toric mirrors for the VLT SPHERE adaptive optics system» parue dans Applied Optics 48, 2932-2941 (2009).

Pour assurer cette correction, le système de déformation comporte une troisième structure S3 comportant des moyens électromécaniques agencés de façon à exercer aux extrémités d'un premier diamètre φ1 du pourtour du miroir deux premières forces F9 et F10 prédéterminées perpendiculairement à la face réfléchissante, de même intensité et de même sens.

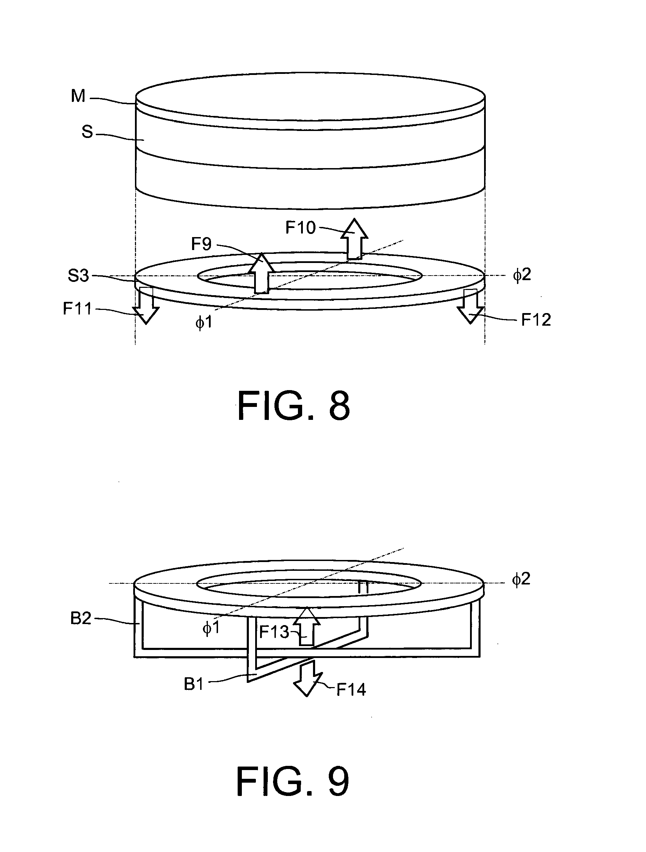

Dans une première variante de réalisation, on peut, à cette fin, utiliser comme on le voit sur la vue en perspective de la figure 8 un anneau de déformation. Cet anneau de déformation peut être disposé soit sous la première structure S1 comme représenté en figure 8, soit entre la première structure S1 et la deuxième structure S2. Comme on le voit sur la figure 8, les moyens électromécaniques peuvent être agencés de façon à exercer aux extrémités d'un second diamètre φ2 du pourtour du miroir orthogonal au premier diamètre, deux secondes forces prédéterminées F11 et F12 perpendiculairement à la face réfléchissante, de même intensité et de sens opposé aux premières forces prédéterminées F9 et F10. La position des forces peut varier selon la disposition générale du dispositif optique et la correction souhaitée.

Dans une seconde variante de réalisation représentée en figure 9, la troisième structure mécanique comporte deux barres déformables B1 et B2 en forme de U et disposées orthogonalement l'une de l'autre et sensiblement parallèlement à la face réfléchissante du miroir, la première barre B1 étant solidaire du pourtour du miroir aux deux extrémités du premier diamètre φ1 et la seconde barre B2 étant solidaire du pourtour du miroir aux deux extrémités du second diamètre φ2, les moyens électromécaniques comportent un seul actionneur qui exerce à l'intersection des deux barres deux forces opposées F13 et F14 qui tendent à modifier la distance qui les sépare dans une dimension perpendiculaire à la face réfléchissante du miroir.

Il est donc possible au moyen d'un nombre réduit d'actionneurs de corriger les trois principaux types d'aberrations. Dans une configuration privilégiée, trois actionneurs suffisent, le premier et le second pour corriger les aberrations de focus et de coma comme représenté sur les figures 5 et 6, le dernier dédié à la correction de l'astigmatisme comme représenté sur la figure 9.

La réalisation des différents actionneurs électromécaniques utilisés dans les dispositifs selon l'invention ne pose pas de problèmes particuliers. Ce type d'actionneur est déjà utilisé en particulier pour le contrôle des surfaces optiques auto-adaptatives.

La calibration des actionneurs, c'est-à-dire l'établissement de la force ou du moment à appliquer pour obtenir la déformation souhaitée ne pose pas de problèmes pour l'homme du métier. On peut l'obtenir par une simulation de calcul de résistance des matériaux composant la structure mécanique du dispositif optique. On peut l'obtenir aussi par mesure sur un banc de tests optiques des déformations mécaniques de la structure ou des déformations optiques d'un front d'onde de référence. Ces différents moyens de mesure sont connus de l'homme du métier.

Le dispositif selon l'invention peut être utilisé en utilisation opérationnelle du miroir, soit pour introduire des déformations statiques, invariables dans le temps, soit pour introduire des variations dynamiques, dépendant de paramètres liées à l'environnement du télescope comme les turbulences atmosphériques, les changements de température ou les changements de configurations optiques.

Ce dispositif peut également être utilisé au moment de la fabrication du miroir et en particulier lors des opérations de polissage. On réalise alors un polissage sous contraintes, le système de déformations appliquant des contraintes prédéterminées au miroir pendant les opérations de polissage que l'on relâche une fois le polissage terminé. Ainsi, on peut polir une forme simple sous contraintes, plane ou sphérique par exemple qui devient une forme naturellement complexe ou asphérique, une fois les contraintes relâchées.

Le dispositif selon l'invention peut être utilisé dans un grand nombre d'applications. On citera notamment :
- La génération de paraboles avec des hors d'axe variables utilisées pour réaliser des synthèses d'ouverture, de grands interféromètres, des pupilles diluées, de la recombinaison pupillaire,...
- La relaxation des contraintes de positionnement pour les grands interféromètres en vol de formation ;
- La correction active de front d'onde d'instruments optiques ;
- La fabrication de masse de miroirs asphériques par polissage sous contrainte, par exemple, pour réaliser les segments des futurs télescopes géants terrestres ou spatiaux.

Les domaines d'application de l'invention sont notamment :
- L'instrumentation optique pour l'observation de la Terre et de l'Univers ;
- L'instrumentation optique de laboratoire ;
- L'instrumentation biomédicale ;
- L'instrumentation pour les applications laser.

Le premier avantage du système selon l'invention tient au fait qu'un nombre réduit d'actionneurs est utilisé pour la génération des aberrations optiques sur la surface du miroir. Un unique actionneur est utilisé pour la génération de chacun des modes.

Le second avantage est que chacun des systèmes de déformation peut se coupler aisément, de manière indépendante, permettant de générer simplement des surfaces optiques complexes définies par les combinaisons linéaires de ces dites aberrations, correspondant à des portions de conicoïdes hors d'axe.

## Revendications

1. Dispositif optique comprenant au moins un miroir (M) déformable et un système de déformation (S) dudit miroir, ledit miroir de forme sensiblement circulaire ayant une face réfléchissante et une face opposée comportant un pourtour solidaire du système de déformation, le système de déformation comporte au moins :
Une première structure (S1) mécanique comprenant au moins un premier pourtour ;
Un premier actionneur électromécanique solidaire de la première structure mécanique ;
Une seconde structure (S2) mécanique comprenant un fond (Fd) sensiblement plan et un second pourtour déformables, le fond étant solidaire du premier pourtour, le second pourtour étant solidaire du pourtour du miroir ;
Un plot (P) rigide solidaire du fond, sensiblement plan et centré sur le fond, le premier actionneur électromécanique exerçant une force prédéterminée (F1) sur le plot perpendiculairement à la surface dudit plot, de façon à générer une répartition uniforme des moments de flexion sur le pourtour du miroir ;
**caractérisé en ce que** le système de déformation comporte un second actionneur électromécanique, ledit second actionneur étant disposé de façon à exercer un moment de flexion prédéterminé sur le plot, de façon à générer une répartition des moments de flexion (Mf) sur le pourtour du miroir modulée par une fonction en sinus ou cosinus.

2. Dispositif optique comprenant au moins un miroir déformable et un système de déformation dudit miroir selon la revendication 1, **caractérisé en ce que** le second actionneur exerce une force prédéterminée (F2) sur le plot parallèlement à la surface dudit plot.

3. Dispositif optique comprenant au moins un miroir déformable et un système de déformation dudit miroir selon la revendication 1, **caractérisé en ce que** le premier actionneur et le second actionneur sont disposés de façon à exercer deux forces prédéterminées (F3, F4) sur le plot perpendiculairement à la surface dudit plot, de même intensité et de sens opposé, les points d'application des deux forces étant séparés d'une distance prédéterminée.

4. Dispositif optique comprenant au moins un miroir déformable et un système de déformation dudit miroir selon la revendication 1, **caractérisé en ce que** quatre actionneurs sont disposés de façon à exercer quatre forces prédéterminées (F5, F6, F7, F8) sur le plot perpendiculairement à la surface dudit plot, d'intensité prédéterminée, les points d'application des forces étant séparés d'une distance prédéterminée.

5. Dispositif optique comprenant au moins un miroir déformable et un système de déformation dudit miroir selon l'une des revendications précédentes, **caractérisé en ce que** le système de déformation comporte une troisième structure (S3) comportant des moyens électromécaniques agencés de façon à exercer aux extrémités d'un premier diamètre (φ1) du pourtour du miroir deux premières forces prédéterminées (F9, F10) perpendiculairement à la face réfléchissante, de même intensité et de même sens.

6. Dispositif optique comprenant au moins un miroir déformable et un système de déformation dudit miroir selon la revendication 5, **caractérisé en ce que** les moyens électromécaniques sont agencés de façon à exercer aux extrémités d'un second diamètre (φ2) du pourtour du miroir orthogonal au premier diamètre, deux secondes forces prédéterminées (F11, F12) perpendiculairement à la face réfléchissante, de même intensité et de sens opposé aux premières forces prédéterminées.

7. Dispositif optique comprenant au moins un miroir déformable et un système de déformation dudit miroir selon la revendication 5, **caractérisé en ce que** la troisième structure comporte deux barres déformables (B1, B2) disposées orthogonalement l'une de l'autre et sensiblement parallèlement à la face réfléchissante, la première barre étant solidaire du pourtour du miroir aux deux extrémités du premier diamètre et la seconde barre étant solidaire du pourtour du miroir aux deux extrémités du second diamètre, les moyens électromécaniques étant agencés de façon à exercer à l'intersection des deux barres deux forces opposées (F13, F14) qui tendent à modifier la distance qui les sépare dans une dimension perpendiculaire à la face réfléchissante, générant ainsi une répartition de moments de flexion sur le pourtour du miroir modulée par une fonction représentant un mode d'astigmatisme.

8. Dispositif optique comprenant au moins un miroir déformable et un système de déformation dudit miroir selon l'une des revendications précédentes, **caractérisé en ce que** la face réfléchissante du miroir déformable est plane ou sphérique ou asphérique en dehors de toute déformation.

9. Procédé de réalisation d'un miroir déformable, **caractérisé en ce que** l'étape de réalisation du polissage dudit miroir est faite sur un outillage comportant un dispositif optique comprenant ledit miroir et un système de déformation dudit miroir selon l'une des revendications précédentes.

## Patentansprüche

1. Optische Vorrichtung, die wenigstens einen verformbaren Spiegel (M) und ein System (S) zum Verformen des Spiegels umfasst, wobei der im Wesentlichen kreisförmige Spiegel eine reflektierende Fläche und eine gegenüberliegende Fläche hat, deren Peripherie in das Verformungssystem integriert ist, wobei das Verformungssystem wenigstens Folgendes umfasst:
eine erste mechanische Struktur (S 1) mit wenigstens einer ersten Peripherie;
einen ersten elektromechanischen Aktuator einstückig mit der ersten mechanischen Struktur;
eine zweite mechanische Struktur (S2) mit einer im Wesentlichen flachen Basis (Fd) und einer zweiten verformbaren Peripherie, wobei die Basis einstückig mit der ersten Peripherie ist, wobei die zweite Peripherie einstückig mit der Peripherie des Spiegels ist;
einen starren, im Wesentlichen flachen Kontakt (P) einstückig mit der Basis und auf der Basis zentriert, wobei der erste elektromechanische Aktuator eine vorbestimmte Kraft (F1) auf den Kontakt senkrecht zur Oberfläche des Kontakts ausübt, um eine gleichförmige Verteilung von Biegemomenten auf der Peripherie des Spiegels zu erzeugen;
**dadurch gekennzeichnet, dass** das Verformungssystem einen zweiten elektromechanischen Aktuator umfasst, wobei der zweite Aktuator so angeordnet ist, dass er ein vorbestimmtes Biegemoment auf den Kontakt ausübt, um eine Verteilung von Biegemomenten (Mf) auf der Peripherie des Spiegels zu erzeugen, die durch eine Sinus- oder Kosinusfunktion moduliert wird.

2. Optische Vorrichtung, die wenigstens einen verformbaren Spiegel und ein System zum Verformen des Spiegels nach Anspruch 1 umfasst, **dadurch gekennzeichnet, dass** der zweite Aktuator eine vorbestimmte Kraft (F2) auf den Kontakt parallel zur Oberfläche des Kontakts ausübt.

3. Optische Vorrichtung, die wenigstens einen verformbaren Spiegel und ein System zum Verformen des Spiegels nach Anspruch 1 umfasst, **dadurch gekennzeichnet, dass** der erste Aktuator und der zweite Aktuator so angeordnet sind, dass sie zwei vorbestimmte Kräfte (F3, F4) mit derselben Intensität und in entgegengesetzten Richtungen auf den Kontakt senkrecht zur Oberfläche des Kontakts ausüben, wobei die Beaufschlagungspunkte der beiden Kräfte um eine vorbestimmte Distanz voneinander getrennt sind.

4. Optische Vorrichtung, die wenigstens einen verformbaren Spiegel und ein System zum Verformen des Spiegels nach Anspruch 1 umfasst, **dadurch gekennzeichnet, dass** vier Aktuatoren so angeordnet sind, dass sie vier vorbestimmte Kräfte (F5, F6, F7, F8) mit vorbestimmter Intensität auf den Kontakt senkrecht zur Oberfläche des Kontakts ausüben, wobei die Beaufschlagungspunkte der Kräfte um eine vorbestimmte Distanz voneinander getrennt sind.

5. Optische Vorrichtung, die wenigstens einen verformbaren Spiegel und ein System zum Verformen des Spiegels nach einem der vorherigen Ansprüche umfasst, **dadurch gekennzeichnet, dass** das Verformungssystem eine dritte Struktur (S3) mit elektromechanischen Mitteln zum Ausüben von zwei vorbestimmten ersten Kräften (F9, F10) mit derselben Intensität und in derselben Richtung an den Enden eines ersten Durchmessers (Φ1) der Peripherie des Spiegels senkrecht zu der reflektierenden Fläche umfasst.

6. Optische Vorrichtung, die wenigstens einen verformbaren Spiegel und ein System zum Verformen des Spiegels nach Anspruch 5 umfasst, **dadurch gekennzeichnet, dass** die elektromechanischen Mittel zum Ausüben von zwei vorbestimmten zweiten Kräften (F11, F12) senkrecht zur reflektierenden Fläche mit derselben Intensität und in entgegengesetzten Richtungen zu den vorbestimmten ersten Kräften an Enden eines zweiten Durchmessers (Φ2) der Peripherie des Spiegels ausgelegt sind, der orthogonal zu dem ersten Durchmesser ist.

7. Optische Vorrichtung, die wenigstens einen verformbaren Spiegel und ein System zum Verformen des Spiegels nach Anspruch 5 umfasst, **dadurch gekennzeichnet, dass** die dritte Struktur zwei verformbare Stäbe (B1, B2) umfasst, die orthogonal zueinander und im Wesentlichen parallel zu der reflektierenden Fläche angeordnet sind, wobei der erste Stab einstückig mit der Peripherie des Spiegels an den beiden Enden des ersten Durchmessers ist und der zweite Stab einstückig mit der Peripherie des Spiegels an den beiden Enden des zweiten Durchmessers ist, wobei die elektromechanischen Mittel zum Ausüben von zwei entgegengesetzten Kräften (F13, F14) an der Kreuzung der beiden Stäbe ausgelegt sind, die dazu neigen, den sie trennenden Abstand in einer Dimension senkrecht zur reflektierenden Fläche zu verändern, um so eine Verteilung von Biegemomenten an der Peripherie des Spiegels zu erzeugen, die durch eine Funktion moduliert wird, die einen Astigmatismusmodus repräsentiert.

8. Optische Vorrichtung, die wenigstens einen verformbaren Spiegel und ein System zum Verformen des Spiegels nach einem der vorherigen Ansprüche umfasst, **dadurch gekennzeichnet, dass** die reflektierende Fläche des verformbaren Spiegels flach oder sphärisch oder asphärisch außerhalb jeglicher Verformung ist.

9. Verfahren zum Erzeugen eines verformbaren Spiegels, **dadurch gekennzeichnet, dass** der Schritt des Polierens des Spiegels mit Werkzeugen durchgeführt wird, die eine optische Vorrichtung umfassen, die den Spiegel und ein System zum Verformen des Spiegels nach einem der vorherigen Ansprüche umfasst.

## Claims

1. An optical device comprising at least one deformable mirror (M) and a system (S) for deforming said mirror, said substantially circular-shaped mirror having a reflective face and an opposite face comprising a periphery integral with said deformation system, said deformation system comprises at least:
a first mechanical structure (S1) comprising at least one first periphery;
a first electromechanical actuator integral with said first mechanical structure;
a second mechanical structure (S2) comprising a substantially flat base (Fd) and a second deformable periphery, said base being integral with said first periphery, said second periphery being integral with the periphery of said mirror;
a rigid, substantially flat pad (P) integral with said base and centred on said base, said first electromechanical actuator exerting a predetermined force (F1) on said pad perpendicular to the surface of said pad so as to generate a uniform distribution of bending moments on the periphery of said mirror,
**characterised in that** said deformation system comprises a second electromechanical actuator, said second actuator being disposed so as to exert a predetermined bending moment on said pad so as to generate a distribution of bending moments (Mf) on the periphery of said mirror that is modulated by a sine or cosine function.

2. The optical device comprising at least one deformable mirror and a system for deforming said mirror according to claim 1, **characterised in that** said second actuator exerts a predetermined force (F2) on said pad parallel to the surface of said pad.

3. The optical device comprising at least one deformable mirror and a system for deforming said mirror according to claim 1, **characterised in that** said first actuator and said second actuator are disposed so as to exert two predetermined forces (F3, F4) of the same intensity and of opposite direction on said pad perpendicular to the surface of said pad, with the points of application of the two forces being separated by a predetermined distance.

4. The optical device comprising at least one deformable mirror and a system for deforming said mirror according to claim 1, **characterised in that** four actuators are disposed so as to exert four predetermined forces (F5, F6, F7, F8) of predetermined intensity on said pad perpendicular to the surface of said pad, with the points of application of the forces being separated by a predetermined distance.

5. The optical device comprising at least one deformable mirror and a system for deforming said mirror according to any one of the preceding claims, **characterised in that** said deformation system comprises a third structure (S3) comprising electromechanical means arranged so as to exert two first predetermined forces (F9, F10) of the same intensity and of the same direction on the ends of a first diameter (Φ1) of the periphery of said mirror perpendicular to the reflective face.

6. The optical device comprising at least one deformable mirror and a system for deforming said mirror according to claim 5, **characterised in that** said electromechanical means are arranged so as to exert two second predetermined forces (F11, F12), of the same intensity and of opposite direction to the first predetermined forces, perpendicular to the reflective face on the ends of a second diameter (Φ2) of the periphery of said mirror that is orthogonal to said first diameter.

7. The optical device comprising at least one deformable mirror and a system for deforming said mirror according to claim 5, **characterised in that** said third structure comprises two deformable bars (B1, B2) disposed orthogonally to each other and substantially parallel to said reflecting face, with the first bar being integral with the periphery of said mirror at the two ends of said first diameter and the second bar being integral with the periphery of said mirror at the two ends of said second diameter, with said electromechanical means being arranged so as to exert two opposing forces (F13, F14) at the intersection of said two bars, which forces tend to modify the distance that separates them in a dimension perpendicular to the reflective face, thus generating a distribution of bending moments on the periphery of said mirror that is modulated by a function representing an astigmatism mode.

8. The optical device comprising at least one deformable mirror and a system for deforming said mirror according to any one of the preceding claims, **characterised in that** said reflective face of said deformable mirror is flat or spherical or aspherical without any deformation.

9. A method for producing a deformable mirror, **characterised in that** the step of polishing said mirror is undertaken on tooling comprising an optical device comprising said mirror and a system for deforming said mirror according to any one of the preceding claims.
